# EUROPEAN PATENT APPLICATION

(11) **EP 4 749 746 A1**
(43) Date of publication of application: **27.05.2026**
(21) Application number: 25774945.7
(22) Date of filing: 13.03.2025
(51) Int. Cl.: H01M 10/0567, H01M 10/0569, H01M 10/42, H01M 10/052, H01M 4/525, H01M 4/505, H01M 4/131, H01M 4/587

(54) **LITHIUM SECONDARY BATTERY HAVING IMPROVED SAFETY**

(30) Priority: 18.03.2024 KR 20240037345
(71) Applicant: LG Energy Solution, Ltd., Seoul 07335 (KR)
(72) Inventor: IM, Tae Yeong, Daejeon 34122 (KR); LEE, Chul Haeng, Daejeon 34122 (KR); AHN, Kyoung Ho, Daejeon 34122 (KR); HAN, Jun Hyeok, Daejeon 34122 (KR); OH, Young Ho, Daejeon 34122 (KR); JEONG, You Kyeong, Daejeon 34122 (KR); KO, Yoon Seok, Daejeon 34122 (KR); SUH, Soo Min, Daejeon 34122 (KR)
(74) Representative: Hoffmann Eitle
(86) International application number: PCT/KR2025/099742
(87) International publication number: WO 2025/198437

(57) **Abstract**

An electrolyte composition for a lithium secondary battery according to an aspect of the present disclosure includes a lithium salt, an electrolyte additive, and a non-aqueous organic solvent. The electrolyte additive includes an inorganic compound, the non-aqueous organic solvent includes a cyclic ester-based solvent in an amount of about 60 vol.% or more and less than 100 vol.%, and the electrolyte composition exhibits a heat flow of about 30.0 W/g or less within a range of about 250 °C to 350 °C when the heat flow measurement is performed on a mixture containing a negative electrode active material of a 100% charged lithium secondary battery and the electrolyte composition, at a weight ratio of about 1:0.5.

## Description

### [Technical Field]

The present disclosure relates to a lithium secondary battery having enhanced high-temperature safety.

This application is based on and claims priority from Korean Patent Application No. 10-2024-0037345 filed on March 18, 2024 with the Korean Intellectual Property Office, the disclosure of which is incorporated herein in its entirety by reference.

### [Background]

Recently, lithium secondary batteries are widely applied not only to small-sized devices such as portable electronic devices, but also to medium to large-sized devices such as battery packs for hybrid vehicles or electric vehicles, or power storage devices.

In manufacturing the lithium secondary batteries, a positive electrode and a negative electrode are manufactured by coating and drying compositions containing electrode active materials on current collectors to a suitable thickness and length, or by molding the electrode active materials themselves into a film shape. Then, these electrodes are wound or stacked together with a separator which is an insulator being interposed therebetween to produce an electrode assembly. The electrode assembly is then placed in a can or a similar container, and an electrolyte is injected to produce lithium secondary batteries.

As a demand for such lithium secondary batteries increases, research is also being conducted actively to improve the safety of the secondary batteries. See, for example, Korean Patent Laid-open Publication No. 10-2022-0105936.

### [Summary]

### [Technical Problem]

Accordingly, the present disclosure provides an electrolyte for a lithium secondary battery and a lithium secondary battery including the same, which may more effectively suppress the occurrence of side reactions between a negative electrode and the electrolyte on a negative electrode surface when the lithium secondary battery is exposed to high temperatures.

### [Technical Solution]

To solve the above-described problems,
in an embodiment, the present disclosure provides an electrolyte composition for a lithium secondary battery, the electrolyte composition including a lithium salt, an electrolyte additive and a non-aqueous organic solvent. The electrolyte additive includes an inorganic compound, the non-aqueous organic solvent includes a cyclic ester-based solvent represented by Formula 1 below in an amount of about 60 vol.% or more and less than 100 vol.%, and the electrolyte composition exhibits a heat flow of about 30.0 W/g or less within a range of about 250 °C to 350 °C when the heat flow measurement is performed on a mixture containing a negative electrode active material of a 100% charged lithium secondary battery and the electrolyte composition, at a weight ratio of about 1:0.5: 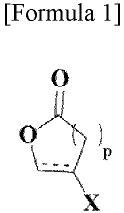
in Formula 1,
   - - - - is a single bond or a double bond,
   X is hydrogen, a fluoro group, or a vinyl group, and
   p is an integer of 1 to 5.

According to an embodiment, the electrolyte composition may have a heat flow of about 5 W/g to 25 W/g.

The negative electrode active material applied for heat flow measurement may include at least one type of natural graphite, artificial graphite, expanded graphite, non-graphitizable carbon, acetylene black and Ketjen black.

Also, the inorganic compound may include at least one type of lithium nitrate (LiNO₃), lithium chloride (LiCl), lithium fluoride (LiF), lithium bromide (LiBr), lithium borate (Li₃BO₃), lithium carbonate (Li₂CO₃), lithium sulfate (Li₂SO₄), and lithium phosphate (Li₃PO₄).

The electrolyte additive may be included in an amount greater than about 0 wt.% and equal to or less than 5 wt.% with respect to the total weight of the electrolyte composition.

The electrolyte composition may include other electrolyte additives in addition to the inorganic compound. The electrolyte additive may include at least one type of cyclic carbon-based compound among vinylene carbonate (VC), 1,3-propanesultone (PS), ethylene sulfate (ESa), propylene sulfate (PSa), butylene sulfate (BSa), and fluoroethylene carbonate (FEC).

In this case, the cyclic carbon-based compound may be included in an amount of about 100 parts by weight to 1,000 parts by weight with respect to 100 parts by weight of the inorganic compound.

The cyclic ester-based solvent represented by Formula 1 may include at least one type of dihydrofuranone, vinyldihydrofuranone, fluorodihydrofuranone, furanone, tetrahydropyranone, methyldihydrofuranone, propyltetrahydropyranone, and oxepanone.

In addition, the non-aqueous organic solvent may further include at least one type of carbonate-based solvent among ethyl methyl carbonate (EMC), dimethyl carbonate (DMC), diethyl carbonate (DEC), ethylene carbonate (EC), propylene carbonate (PC), and butylene carbonate (BC).

The carbonate-based solvent may be included in an amount greater than about 0 vol.% and equal to or less than 40 vol.% with respect to the total weight of the non-aqueous organic solvent.

The lithium salt may include Li⁺ as a cation, and at least one type of PF₆⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂04)₂PF₂⁻, BF₂C₂O₄⁻, B(C₂O₄)₂⁻, (CF₃SO₂)₂N⁻, (FSO₂)₂N⁻, (CF₃CF₂SO₂)₂N⁻, and ((C(CN))₂NC(CF₃))N⁻, as an anion.

Further, in an embodiment, the present disclosure provides a lithium secondary battery that includes: an electrode assembly including a positive electrode, a negative electrode, and a separator provided between the positive electrode and the negative electrode; and the above-described electrolyte composition according to the present disclosure, with which the electrode assembly is impregnated.

Here, the positive electrode may include a positive electrode active layer provided on at least one surface of a positive electrode current collector and containing a positive electrode active material represented by Formula 2:

[Formula 2] Liₓ[Ni_{y}Co_{z}Mn_{w}M¹ᵥ]O₂

in Formula 2,
M¹ is at least one type of element selected from the group including W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, and v satisfy the ranges of 0.9≤x≤1.30, 0.6≤y<1, 0<z≤0.2, 0<w≤0.2, and 0≤v≤.01, respectively, and y+z+w+v=1.

### [Advantageous Effects]

The electrolyte composition for the lithium secondary battery according to the present disclosure may uniformly form a solid electrolyte interface layer (SEI layer) with high lithium ion conductivity and excellent heat resistance on the negative electrode surface when the lithium secondary battery is activated. Therefore, the reactivity between the negative electrode active material and the electrolyte composition is significantly lowered. Thus, the temperature at which heat generation starts between the negative electrode active material and the electrolyte composition (e.g., heat generation onset temperature) increases, and then it is possible to suppress heat generation caused, for example, by negative electrode deterioration. Also, it is possible to minimize the occurrence of side reactions of the electrolyte composition on the negative electrode surface when the lithium secondary battery including the electrolyte composition is exposed to high temperatures, and thus the high-temperature safety becomes excellent in the lithium secondary battery.

### [Brief Description of the Drawings]

The following drawings attached hereto illustrate embodiments of the present disclosure and serve to further understand the technical idea of the present disclosure together with the detailed description of the disclosure to be described later. Therefore, the present disclosure should not be construed as being limited to the matters illustrated in the drawings.

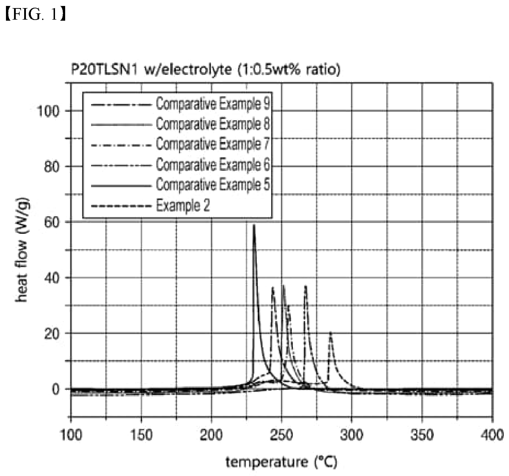

FIG. 1 is a graph illustrating the heat flow in an electrolyte composition, according to the types of electrolyte additives according to one embodiment of the present disclosure.

In some of the attached drawings, corresponding components are given the same reference numerals. Those skilled in the art would appreciate that the drawings depict elements simply and clearly, and have not necessarily been drawn to scale. For example, in order to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the spirit of the various embodiments of the present disclosure.

### [Detailed Description]

Since the present disclosure is susceptible to various modifications and may have various embodiments, specific embodiments will be described in detail in the detailed description.

However, this is not intended to limit the present disclosure to a specific embodiment, and should be understood to include all modifications, equivalents or substitutes included in the spirit and technical scope of the present disclosure.

In the present disclosure, it should be understood that terms such as "include" or "have" are intended to specify the presence of features, numbers, steps, operations, components, parts or combinations thereof described in the specification, but do not exclude in advance the possibility of the presence or addition of one or more other features, numbers, steps, operations, components, parts or combinations thereof.

Also, in the present disclosure, when a part such as a layer, a film, a region, or a plate is described as being "on" the other part, this includes not only a case where the part is "directly above" the other part but also a case where there is another part in between. Conversely, when a part such as a layer, a film, a region, or a plate is described as being "under" the other part, this includes not only a case where the part is "just below" the other part but also a case where there is another part in between. Also, in the present application, being placed "on" may include being placed on the lower side as well as the upper side.

Also, in the present disclosure, "including as a main component" may mean that a defined component is included in an amount of 50 wt.% or more (or 50 vol.% or more), 60 wt.% or more (or 60 vol.% or more), 70 wt.% or more (or 70 vol.% or more), 80 wt.% or more (or 80 vol.% or more), 90 wt.% or more (or 90 vol.% or more) or 95 wt.% or more (or 95 vol.% or more) with respect to the total weight (or total volume). For example, "including a cyclic ester-based solvent as a main component of a non-aqueous organic solvent," may mean that a cyclic ester-based solvent is included in an amount of 50 vol.% or more, 60 vol.% or more, 70 vol.% or more, 80 vol.% or more, 90 vol.% or more, or 95 vol.% or more with respect to the total volume of the non-aqueous organic solvent. In some cases, it may also mean that the entire non-aqueous organic solvent is made up of a cyclic ester-based solvent (the content: 100 vol.%).

Since a lithium secondary battery operates at a high operating voltage, aqueous electrolytes that are highly reactive with lithium may not be used, and instead, organic electrolytes are generally used. The organic electrolytes are produced by dissolving a lithium salt in an organic solvent. The organic solvent uses a material that is stable at a high voltage, and has a high ion conductivity, a high permittivity, and a low viscosity.

In general, as for such an organic solvent, a carbonate-based polar non-aqueous solvent is used. The carbonate-based non-aqueous solvent causes an irreversible reaction in which an excessive amount of charge is used due to side reactions between negative/positive electrodes and an electrolyte during the initial charging of a lithium secondary battery. The irreversible reaction forms a passivation layer such as a solid electrolyte interface layer (hereinafter, SEI layer) on a negative electrode surface, and the SEI layer prevents electrolyte decomposition on the negative electrode surface during charging/discharging and serves as an ion tunnel. Therefore, as the SEI layer has a high stability and a low resistance, the life of the lithium secondary battery may be improved.

Meanwhile, various additives are used in the electrolyte to stabilize the SEI layer. Since the SEI layer formed using conventional general additives is easily deteriorated at high temperatures, the SEI layer formed by applying conventional general additives has reduced stability at high temperatures.

In consideration of these points, the present disclosure provides a technology in which the occurrence of side reactions with the electrolyte on the negative electrode surface at high temperatures is suppressed so that the high-temperature safety of the lithium secondary battery may be further improved.

Hereinafter, the present disclosure will be described in more detail with accompanying drawings.

### Electrolyte composition for lithium secondary battery

In an embodiment, the present disclosure provides an electrolyte composition for a lithium secondary battery, in which the electrolyte composition including a lithium salt, an electrolyte additive and a non-aqueous organic solvent. The electrolyte additive includes an inorganic compound, the non-aqueous organic solvent includes a cyclic ester-based solvent represented by Formula 1 below in an amount of about 60 vol.% or more and less than 100 vol.%, and the electrolyte composition exhibits a heat flow of about 30.0 W/g or less within a range of 250 °C to 350 °C when the heat flow measurement is performed on a mixture containing a negative electrode active material of a 100% charged lithium secondary battery and the electrolyte composition, at a weight ratio of about 1:0.5: 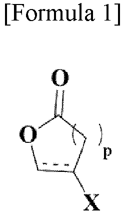 in Formula 1,
- - - - is a single bond or a double bond,
X is hydrogen, a fluoro group, or a vinyl group, and
p is an integer of 1 to 5.

The electrolyte composition for the lithium secondary battery according to the present disclosure is a liquid electrolyte. This electrolyte allows a solid electrolyte interface layer (SEI layer) having high lithium ion conductivity and excellent heat resistance to be uniformly formed on the surface of the negative electrode when the lithium secondary battery is activated. Therefore, since the reactivity between the negative electrode active material and the electrolyte composition is significantly lowered, the temperature (e.g., heat generation onset temperature) at which heat generation starts between the negative electrode active material and the electrolyte composition increases. This may suppress the heat generation caused, for example, by deterioration in the negative electrode. Also, the lithium secondary battery including the electrolyte composition has excellent high-temperature safety because it is possible to minimize side reactions of the electrolyte composition which occur on the negative electrode surface during exposure to high temperatures.

To this end, the electrolyte composition includes a lithium salt, an electrolyte additive and a non-aqueous organic solvent, and the lithium salt, the electrolyte additive and the non-aqueous organic solvent may have predetermined compositions.

According to an embodiment, the electrolyte additive may include an inorganic compound, and the inorganic compound may contain at least one type of lithium nitrate (LiNO₃), lithium chloride (LiCl), lithium fluoride (LiF), lithium bromide (LiBr), lithium borate (Li₃BO₃), lithium carbonate (Li₂CO₃), lithium sulfate (Li₂SO₄), and lithium phosphate (Li₃PO₄).

As an example, the inorganic compound may contain lithium nitrate (LiNO₃) and/or lithium sulfate (Li₂SO₄).

When the inorganic compound is included as the electrolyte additive, it is possible to directly lower the reactivity between the electrolyte composition and lithium ions intercalated into and/or deintercalated from the negative electrode active material, thereby reducing the heat generation amount. Also, the inorganic compound indirectly participates in the formation of the SEI layer during activation of the lithium secondary battery. Thus, it is possible to provide the SEI layer with lithium nitride (Li₃N), lithium oxide (Li₂O), partially reduced lithium nitrate (LiNOₓ, 0<x<3), etc. which have high lithium ion transport capability and excellent heat resistance. Then, a SEI layer with excellent heat resistance may be uniformly formed on the negative electrode surface.

As an example, in the differential scanning calorimetry (DSC) analysis of the electrolyte composition containing the inorganic compound, the temperature (e.g., onset temperature) at which heat generation of the negative electrode active material starts during high temperature exposure may be 250 °C or more, or may be 260 °C or more, 270 °C or more, 250 °C to 310 °C, 260 °C to 310 °C, 270 °C to 310 °C, 265 °C to 300 °C, greater than 270 °C and equal to or less than 310 °C, greater than 270 °C and equal to or less than 300 °C, or 275 °C to 300 °C.

The electrolyte additive may further include a cyclic carbon-based compound together with the inorganic compound. For example, the cyclic carbon-based compound may contain at least one type of vinylene carbonate (VC), 1,3-propane sultone (PS), ethylene sulfate (ESa), propylene sulfate (PSa), butylene sulfate (BSa), and fluoroethylene carbonate (FEC).

In an embodiment, the cyclic carbon-based compound may contain vinylene carbonate (VC), 1,3-propane sultone (PS), ethylene sulfate (ESa), and/or propylene sulfate (PSa).

When the cyclic carbon-based compound is included in the electrolyte composition together with the inorganic compound, it is possible to increase the initial charging/discharging capacity of the lithium secondary battery, and moreover, it is possible to suppress decomposition of a non-aqueous organic solvent accounting for most of the electrolyte composition under high temperature conditions. Thus, it is possible to improve the cycle characteristics of the lithium secondary battery while suppressing gas generation.

The electrolyte composition may include the above-described electrolyte additive in a predetermined amount. According to an embodiment, the electrolyte additive may be included in an amount greater than about 0 wt.% and equal to or less than 5 wt.% with respect to the total weight of the electrolyte composition, or may be included in, for example, an amount greater than about 0 wt.% and equal to or less than 4 wt.% with respect to the total weight of the electrolyte composition; greater than 0 wt.% and equal to or less than 3 wt.%; greater than 0 wt.% and equal to or less than 2 wt.%; greater than 0 wt.% and equal to or less than 1 wt.%; greater than 0 wt.% and equal to or less than 0.9 wt.%; 0.1 wt.% to 5 wt.%; 0.1 wt.% to 4 wt.%; 0.1 wt.% to 3 wt.%; 0.1 wt.% to 2 wt.%; 0.1 wt.% to 1 wt.%; 0.5 wt.% to 4 wt.%; 1 wt.% to 5 wt.%; 2 wt.% to 4.5 wt.%; 2.5 wt.% to 5 wt.%; 3 wt.% to 5 wt.%; 2 wt.% to 4 wt.%; or 3 wt.% to 4.5 wt.%.

In the present disclosure, the viscosity of the electrolyte composition is properly maintained by controlling the total content of the electrolyte additive within the above-described range. Then, it is possible to prevent or suppress the wettability for the separator from being deteriorated while preventing reduction of ion conductivity of the electrolyte composition and degradation of the battery performance.

Here, when the electrolyte additive includes only the inorganic compound alone, the inorganic compound may be included in the electrolyte composition in the same content range as that of the above-described total content of the electrolyte additive.

Also, when the electrolyte additive includes both the inorganic compound and the cyclic carbon-based compound, the total content of the inorganic compound and the cyclic carbon-based compound may satisfy the above-described total content range of the electrolyte additive. In this case, the content of the inorganic compound and the content of the cyclic carbon-based compound may have a predetermined ratio.

For example, when the electrolyte additive includes the inorganic compound and the cyclic carbon-based compound, the cyclic carbon-based compound may be included in an amount of about 100 parts by weight to 1000 parts by weight relative to 100 parts by weight of the inorganic compound. For example, the cyclic carbon-based compound may be included in an amount of about 100 parts by weight to 900 parts by weight relative to 100 parts by weight of the inorganic compound; 100 parts by weight to 800 parts by weight; 100 parts by weight to 700 parts by weight; 300 parts by weight to 900 parts by weight; 450 parts by weight to 900 parts by weight; 400 parts by weight to 800 parts by weight; or 500 parts by weight to 700 parts by weight.

When the acidity of the electrolyte composition increases, a concentration polarization phenomenon may be caused and the transport speed of lithium ions may be lowered. However, in the present disclosure, since the content ratio of the inorganic compound and the cyclic carbon-based compound is controlled as described above, it is possible to prevent or suppress the acidity of the electrolyte composition from being increased due to the high ratio of the inorganic compound. Also, in the present disclosure, it is possible to sufficiently improve the heat resistance and thickness uniformity of the SEI layer formed on the negative electrode surface by controlling the above-described content ratio of the inorganic compound and the cyclic carbon-based compound as described above.

In addition, the electrolyte composition contains the non-aqueous organic solvent, and the non-aqueous organic solvent includes a cyclic ester-based solvent represented by Formula 1 below as a main component: 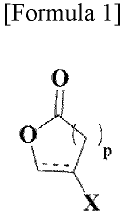 in Formula 1,
- - - - is a single bond or a double bond,
X is hydrogen, a fluoro group, or a vinyl group, and
p is an integer of 1 to 5.

According to an embodiment, the cyclic ester-based solvent represented by Formula 1 may include at least one type of ester-based cyclic compounds enumerated below:
For the electrolyte for the lithium secondary battery, a non-aqueous organic solvent substituted with fluorine such as fluoroethylene carbonate (FEC) has been employed in the related art in order to suppress the decomposition of the electrolyte composition on the positive electrode and/or negative electrode surface and to improve the high-temperature safety. However, since such a fluorine-based organic solvent has a low reduction potential, when this solvent is applied to the electrolyte, there are problems such as a decrease in the battery capacity or deterioration of cycle characteristics.

In comparison with this, the cyclic ester-based solvent represented by Formula 1 has a high permittivity, and thus, has features of excellence in electrical performance such as cycle characteristics. Furthermore, the inorganic compound such as lithium nitrate (LiNO3) needs to be completely dissociated in the electrolyte composition in order to serve as an additive. However, since the inorganic compound exhibits low solubility in a carbonate-based solvent, when the carbonate-based solvent is used as a main component of the non-aqueous solvent, the inorganic compound may not fully exhibit the function as the electrolyte additive. However, since the inorganic compound exhibits high solubility in the cyclic ester-based solvent represented by Formula 1, complete dissociation of the inorganic compound included in the electrolyte composition may be induced. Also, due to the cyclic ester-based solvent represented by Formula 1, the transfer of external heat to the negative electrode active material may be minimized when the lithium secondary battery is exposed to high temperatures. Thus, the solvent may have excellent features in the effect of improving the high-temperature safety of the lithium secondary battery.

The cyclic ester-based solvent may be included in an amount of about 60 vol.% or more relative to the total weight of the non-aqueous solvent of the electrolyte composition, or may be included in an amount of, for example, about 60 vol.% or more and less than 100 vol.%; 70 vol.% or more and less than 100 vol.%; 75 vol.% or more and less than 100 vol.%; 80 vol.% or more and less than 100 vol.%; 85 vol.% or more and less than 100 vol.%; 90 vol.% or more and less than 100 vol.%; 60 vol.% to 99 vol.%, 70 vol.% to 99 vol.%, 80 vol.% to 99 vol.%, 90 vol.% to 99 vol.%, 95 vol.% to 99 vol.%, 60 vol.% to 80 vol.%, or 70 vol.% to 90 vol.%.

In the present disclosure, the dissociation of the inorganic compound may sufficiently proceed by controlling the content of the cyclic ester-based solvent included in the non-aqueous solvent as described above, and the heat transferred to the negative electrode active material may be sufficiently reduced when the lithium secondary battery is exposed to high temperatures. Also, since the cyclic ester-based solvent has excellent heat resistance, when the content is controlled within the above range, the electrolyte composition is not easily decomposed at high temperatures. Then, in combination with a predetermined lithium salt according to the present disclosure, there is an advantage in that the amount of heat transferred to the negative electrode active material may be minimized.

Furthermore, the non-aqueous organic solvent may further include a carbonate-based solvent together with the cyclic ester-based solvent. The carbonate-based solvent performs a role in assisting the cyclic ester-based solvent which is the main component of the non-aqueous organic solvent so as to control the permittivity and viscosity of the electrolyte composition. Through this, the carbonate-based solvent may ensure high ion conductivity of the electrolyte composition.

Also, the carbonate-based solvents may improve the low temperature performance of the electrolyte composition, and may perform a function of preventing side reactions of the electrolyte composition from being induced and generating gas during high temperature exposure. Accordingly, in terms of the electrochemical stability for oxidation/reduction and the chemical stability for the reaction with heat or solute, one type of carbonate-based solvent may be singly mixed with the cyclic ester-based solvent represented by Formula 1, or two or more types may be arbitrarily combined according to the intended use and then may be mixed with the cyclic ester-based solvent before being used.

Such a carbonate-based solvent may include ethyl methyl carbonate (EMC), dimethyl carbonate (DMC), diethyl carbonate (DEC), ethylene carbonate (EC), propylene carbonate (PC), and butylene carbonate (BC), which may be used either alone or in combination thereof.

When the auxiliary solvent is mixed with the cyclic ester-based solvent, a certain volume ratio may be satisfied such that the permittivity and viscosity of the electrolyte composition may be controlled without lowering the solubility of the inorganic compound that is an electrolyte additive. According to an embodiment, the auxiliary solvent may be included in an amount of 40 vol.% or less relative to the total volume of the non-aqueous organic solvent, or may be included in, for example, an amount greater than about 0 vol.% and equal to or less than 40 vol.% relative to the total volume of the non-aqueous organic solvent; greater than 0 vol.% and equal to or less than 30 vol.%; greater than 0 vol.% and equal to or less than 25 vol.%; greater than 0 vol.% and equal to or less than 20 vol.%; greater than 0 vol.% and equal to or less than 15 vol.%; greater than 0 vol.% and equal to or less than 10 vol.%; 1 vol.% to 40 vol.%; 1 vol.% to 30 vol.%; 1 vol.% to 20 vol.%; 1 vol.% to 10 vol.%; 1 vol.% to 5 vol.%; 20 vol.% to 40 vol.%; or 10 vol.% to 30 vol.%.

In the present disclosure, it is possible to maintain high compatibility between the ester-based solvent and the auxiliary solvent by adjusting the content of the auxiliary solvent in the entire non-aqueous organic solvent to the above ratio, and at the same time, it is possible to increase the charge mobility and/or the ion mobility of the battery, thereby improving the performance of the battery.

The electrolyte composition may contain a specific lithium salt in order to reduce the amount of heat transferred to the positive electrode active material. According to one embodiment, the lithium salt may include Li⁺ as a cation and at least one type of phosphate-based lithium salts including PF₆⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, and (C₂O4)₂PF₂⁻; borate-based lithium salts including BF₂C₂O₄⁻ and B(C₂O₄)₂⁻; and sulfonyl imide-based lithium salts including (CF₃SO₂)₂N⁻, (FSO₂)₂N⁻, (CF₃CF₂SO₂)₂N⁻, and ((C(CN))₂NC(CF₃))N⁻, as an anion, or two or more types may be used in combination as necessary.

The lithium salt basically imparts conductivity to the organic solvent constituting the electrolyte, and also plays a role in inducing passivation of the negative electrode through SEI formation. In the present disclosure, the lithium salt may be dissolved in the cyclic ester-based solvent to perform a function of delaying side reactions between the electrolyte composition and lithium ions deintercalated from the negative electrode during high temperature exposure of the lithium secondary battery. To this end, the lithium salt applied in the present disclosure may selectively include two or more types of the above-described lithium salts.

As an example, the lithium salt may include lithium hexafluorophosphate (hereinafter, LiPF₆) and lithium bis(trifluoromethanesulfonyl)imide (anion: (CF₃SO₂)₂N⁻, hereinafter, LiFSI).

LiPF₆ is a phosphate-based lithium salt commonly applied to the electrolyte composition of the lithium secondary battery, and exhibits PF₆⁻ as an anion when dissociated. Also, LiPF₆ has a characteristic of impartment of high conductivity to the carbonate-based electrolyte. However, when LiPF₆ is singly applied as the lithium salt, LiPF₆ is decomposed into PF₅ at about 200 °C or more during high temperature exposure. This may cause an unstable state, and also may lower the high temperature durability of the electrode by removing a film located on the surface of the positive electrode active layer. The film is derived from the organic substance such as a solvent and the electrode active material. Thus, in the present embodiment, LiPF₆ is not applied alone as the lithium salt, but instead, two or more types are applied as described above.

Also, LiFSI, which is one of sulfonyl imide-based lithium salts, has a high decomposition temperature in the carbonate-based solvent and thus has a high safety at high temperatures. Also, due to high water resistance, even when LiFSI is in contact with moisture, the generation amount of hydrogen fluoride (HF) is not large. Meanwhile, the sulfonyl imide group itself of LiFSI has a significantly high reactivity with aluminum, and then causes corrosion of a positive electrode current collector when applied to the electrolyte composition. For example, when the inorganic additive of the present disclosure is excluded, the flow of heat transferred to the negative electrode active material is high. Thus, there is a limitation in that the application to the electrolyte composition is difficult.

When these LiPF₆ and LiFSI are applied together, the effect of significantly improving the low high-temperature safety of LiPF₆ is achieved. Moreover, it is possible to achieve the effect of significantly reducing the flow of heat transferred to the negative electrode active material through the electrolyte composition.

Here, among the lithium salts used together, when the phosphate-based lithium salt is referred to as a first lithium salt, and the sulfonyl imide-based lithium salt is referred to as a second lithium salt, the first lithium salt and the second lithium salt may have a predetermined mixing ratio. For example, the mixing ratio of the first lithium salt and the second lithium salt may be about 1:0.1 to 1.0 based on the molality (M), or may be, for example, about 1: 0.4 to 0.9 or 1:0.6 to 0.8. In the present disclosure, by controlling the ratio of the first lithium salt and the second lithium salt as described above, it is possible to minimize the respective disadvantages of the lithium salts while maximizing the effect of lowering the heat flow in the electrolyte composition.

The concentration of these lithium salts may satisfy a predetermined concentration in order to maintain the inherent function of the lithium salts and to increase the high-temperature safety effect. For example, the lower limit of the concentration of the lithium salts may be about 0.5 mol/L or more, for example, about 0.7 mol/L or more, or about 0.9 mol/L or more; and the upper limit may be about 2.5 mol/L or less, about 2.0 mol/L or less, or about 1.5 mol/L or less. By maintaining the concentration of the lithium salts within the above range, it is possible to properly maintain the ion conductivity and to improve the cycle characteristics and output characteristics of the non-aqueous electrolyte battery. Also, by maintaining the concentration of the lithium salts within the above range, the viscosity of the electrolyte for the non-aqueous electrolyte battery is maintained at an appropriate value. Then, the ion conductivity may be appropriately maintained without being lowered, and cycle characteristics and output characteristics of the non-aqueous electrolyte battery may be improved.

Also, when a large amount of lithium salt is dissolved in the non-aqueous organic solvent at one time, in some cases, the liquid temperature may rise due to the heat of dissolution of the lithium salt. In this way, when the temperature of the non-aqueous organic solvent significantly rises due to the heat of dissolution of the lithium salt, in the case of a fluorinecontaining lithium salt, the decomposition is promoted, thereby generating hydrogen fluoride (HF) that causes deterioration of battery performance. Therefore, the temperature at which the lithium salt is dissolved in the non-aqueous organic solvent is not particularly limited, but may be adjusted to about -20 °C to 80 °C, or may be adjusted to, for example, about 0 °C to 60 °C.

Since the electrolyte composition according to the present disclosure has the above-described composition, the SEI layer may be uniformly formed on the negative electrode surface when the lithium secondary battery is activated. This minimizes the occurrence of side reactions with the electrolyte composition on the negative electrode surface, thereby improving the high-temperature safety of the lithium secondary battery.

As an example, the electrolyte composition may exhibit a heat flow of about 30.0 W/g or less within a range of 250 °C to 350 °C when the heat flow measurement is performed on a mixture containing the negative electrode active material of a 100% charged lithium secondary battery and the electrolyte composition, at a weight ratio of about 1:0.5. For example, in the heat flow measurement, the electrolyte composition may exhibit a heat flow of about 5 W/g to 25 W/g; 5 W/g to 20 W/g; 10 W/g to 25 W/g; 15 W/g to 25 W/g; 17 W/g to 23 W/g; or 19 W/g to 22 W/g within a range of 250 °C to 350 °C.

The negative electrode active material may be a carbon-based negative electrode active material commonly applied as the negative electrode active material of the lithium secondary battery. For example, the negative electrode active material may include at least one type of natural graphite, artificial graphite, expanded graphite, non-graphitizable carbon, acetylene black, and Ketjen black.

The "heat flow" stands for the amount of heat flowing per unit weight, and may indicate, for example, the degree of heat generated in the secondary battery. As a result of analyzing the electrolyte composition of the present disclosure by using a thermal analysis method, the electrolyte composition exhibited a relatively low heat flow compared to a conventional electrolyte composition. The thermal analysis method simulates a deterioration phenomenon in which the performance of the secondary battery is degraded when the secondary battery is exposed to high temperatures or spontaneously generates heat due to external mechanical factors. Here, the heat flow measured according to the thermal analysis result indicates the degree (e.g., an amount of heat) of heat generated by a high-temperature reaction between the electrolyte composition and the negative electrode active material of the charged lithium secondary battery, in the simulation of the high temperature deterioration phenomenon of the secondary battery. The heat flow may be increased or decreased according to the type or content ratio of each component constituting the electrolyte composition, and may be increased or decreased depending on whether an inorganic negative electrode film including lithium ions is formed on the negative electrode active layer surface. The reduction of the heat flow indicates that the amount of heat generated between the negative electrode active material and the electrolyte composition is reduced. For example, the heat reduction indicates that the extent to which lithium ions intercalated into the negative electrode active material react with the electrolyte composition is reduced, and thus, the generated heat is reduced. The result indicates that the electrolyte composition has decreased reactivity with lithium ions in the negative electrode active material under high temperature conditions, and thus, indicates that the thermal safety of the lithium secondary battery is improved.

### Lithium secondary battery

According to an embodiment of the present disclosure, provided is a lithium secondary battery that includes:
an electrode assembly including a positive electrode, a negative electrode, and a separator provided between the positive electrode and the negative electrode; and
the above-described electrolyte composition according to the present disclosure, with which the electrode assembly is impregnated. The lithium secondary battery according to an embodiment of the present disclosure may further include a casing, and may be manufactured as, for example, a prismatic type, a pouch type, a coin type or a cylindrical type depending on the manufacturing form.

The lithium secondary battery according to the present disclosure includes the electrode assembly, and the electrolyte composition with which the electrode assembly is impregnated. The electrode assembly has a structure where the separator is arranged between the positive electrodes and the negative electrodes that are alternately stacked.

The electrolyte composition may uniformly form an SEI layer with high lithium ion conductivity and excellent heat resistance on the negative electrode surface when the lithium secondary battery is activated.

Therefore, the lithium secondary battery including the electrolyte composition has significantly lowered reactivity between the negative electrode active material (e.g., lithium ions intercalated into the negative electrode active material) and the electrolyte composition. Thus, the temperature at which heat generation starts between the negative electrode active material and the electrolyte composition (e.g., heat generation onset temperature) increases, and then it is possible to suppress heat generation caused, for example, by negative electrode deterioration. Also, it is possible to minimize the occurrence of the side reactions of the electrolyte composition on the negative electrode surface when the lithium secondary battery including the electrolyte composition is exposed to high temperatures, and thus, there is an advantage of excellent high-temperature safety.

The lithium secondary battery includes the electrode assembly and the electrolyte composition with which the electrode assembly is impregnated. Here, since the electrolyte composition has the same composition as that described above, detailed description thereof will be omitted.

Hereinafter, each component of the electrode assembly will be described in detail.

The electrode assembly includes the positive electrode, the negative electrode, and the separator interposed between the positive electrode and the negative electrode.

Here, the positive electrode includes a positive electrode active layer provided on at least one surface of a positive electrode current collector. The positive electrode active layer includes, as a main component, a lithium metal oxide represented by Formula 2 and allowing reversible intercalation/deintercalation of lithium ions, which is a material capable of implementing electrical activity by causing an electrochemical reaction on the positive electrode current collector:

[Formula 2] Liₓ[Ni_{y}Co_{z}Mn_{w}M¹ᵥ]O₂

in Formula 2,
M¹ is at least one type of element selected from W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, and v satisfy the ranges of about 0.9≤x≤1.30, about 0.6≤y<1, about 0<z≤0.2, about 0<w≤0.2, and about 0≤v≤0.1, respectively, and y+z+w+v=1.

The lithium metal oxide represented by Formula 2 is an oxide in which lithium (Li) and transition metals, nickel (Ni), cobalt (Co) and manganese (Mn), are mixed, and the content of nickel (Ni) is about 60% or more (for example, 60 mol% or more) of the total mole fraction of transition metals.

A three-component NCM-based positive electrode active material having nickel (Ni), cobalt (Co), and manganese (Mn) as main components has advantages such as the high capacity of LiNiO₂ (LNO), the excellent electrochemical performance of LiCoO₂ (LCO), and the stability of LiMn₂O₄ (LMO), in balance.

As for the positive electrode active material, at least one type of LiNi_{0.95}Co_{0.03}Mn_{0.02}O₂, LiNi_{0.9}Co_{0.05}Mn_{0.05}O₂, LiNi_{0.9}CO_{0.06}Mn_{0.04}O₂, LiNi_{0.85}Co_{0.1}Mn_{0.05}O₂, LiNi_{0.85}Co_{0.05}Mn_{0.1}O₂, LiNi_{0.8}Co_{0.1}Mn_{0.1}O₂, LiNi_{0.75}Co_{0.1}Mn_{0.15}O₂, LiNi_{0.7}Co_{0.2}Mn_{0.1}O₂, LiNi_{0.7}Co_{0.15}Mn_{0.15}O₂, LiNi_{0.7}Co_{0.1}Mn_{0.2}O₂, LiNi_{0.7}Co_{0.05}Mn_{0.25}O₂, LiNi_{0.6}CO_{0.2}Mn_{0.2}O₂, LiNi_{0.6}CO_{0.2}Mn_{0.1}Al_{0.1}O₂, LiNi_{0.6}Co_{0.2}Mn_{0.15}Al_{0.05}O₂, and LiNi_{0.7}Co_{0.1}Mn_{0.1}Al_{0.1}O₂ may be mentioned.

Also, the positive electrode active material may be included in an amount of about 85 parts by weight or more relative to the total weight of the positive electrode active layer, and may be included in an amount of, for example, about 90 parts by weight or more, 93 parts by weight or more, or 95 parts by weight or more.

The positive electrode active layer may further include a conductive material, a binder, and other additives together with the positive electrode active material as necessary.

The conductive material is used to improve the electrical performance of the positive electrode, and those commonly used in the art may be applied. Specifically, the conductive material may include at least one type selected from graphite such as natural graphite and artificial graphite; carbon black such as acetylene black, channel black, furnace black, lamp black, and thermal black; graphene; and carbon nanotubes.

In addition, the conductive material may be included in an amount of about 0.1 to 5 parts by weight relative to the total weight of the positive electrode active layer, or may be included in an amount of, for example, about 0.1 to 4 parts by weight; 2 to 4 parts by weight; 1.5 to 5 parts by weight; 0.5 to 3.5 parts by weight; 1 to 3 parts by weight; 0.1 to 2.5 parts by weight; 0.1 to 2 parts by weight; or 0.1 to 1 parts by weight.

Also, the binder performs a role in binding the positive electrode active material, the positive electrode additives and the conductive material to each other, and any binder may be used without particular limitation as long as it has such a function. For example, the binder may include at least one type of resin selected from polyvinylidene fluoride-hexafluoropropylene copolymer (PVdF-co-HFP), polyvinylidene fluoride (PVdF), polyacrylonitrile, polymethyl methacrylate and copolymers thereof. As an example, the binder may include polyvinylidene fluoride (PVdF).

Moreover, the binder may be included in an amount of about 0.1 parts by weight to 5 parts by weight relative to the total weight of the positive electrode active layer, or may be included in an amount of, for example, about 0.1 parts by weight to 4 parts by weight; 2 to 4 parts by weight; 1.5 to 5 parts by weight; 0.5 to 3.5 parts by weight; 1 to 3 parts by weight; 0.1 to 2.5 parts by weight; 0.1 to 2 parts by weight; or about 0.1 parts by weight to 1 parts by weight.

The total thickness of the positive electrode active layer is not particularly limited, but may be, for example, about 50 µm to 300 µm, or may be about 100 µm to 200 µm; 80 µm to 150 µm; 120 µm to 170 µm; 150 µm to 300 µm; 200 µm to 300 µm; or 150 µm to 190 µm.

As for the positive electrode current collector of the positive electrode, those having high conductivity without causing a chemical change in the corresponding battery may be used. For example, stainless steel, aluminum, nickel, titanium, or calcined carbon may be used, and in the case of aluminum or stainless steel, those surface-treated with carbon, nickel, titanium, or silver may also be used. In addition, as for the average thickness of the current collector, the thickness ranging from about 3 µm to 500 µm may be appropriately applied in consideration of the conductivity and total thickness of the positive electrode to be manufactured.

As in the positive electrode, the negative electrode includes a negative electrode active layer containing a negative electrode active material, on at least one surface of a negative electrode current collector.

The negative electrode active layer includes a carbon-based negative electrode active material as the negative electrode active material so as to implement electrical activity through reversible redox reactions during charging/discharging of the battery.

The carbon-based negative electrode active material refers to a material having carbon atoms as a main component, and as for such a carbon-based negative electrode active material, graphite may be included. The graphite may include at least one of natural graphite and artificial graphite.

As an example, the carbon-based negative electrode active material may include mixed graphite that is a mixture of natural graphite and artificial graphite. In this case, the mixed graphite may be a mixture of natural graphite and artificial graphite at a weight ratio of about 10 to 50:50 to 90, or about 10 to 30:70 to 90. In a case where the content ratio of natural graphite to artificial graphite in the mixed graphite is adjusted as described above, it is possible to prevent or suppress the adhesive force between the negative electrode current collector and the negative electrode active layer from being reduced due to the natural graphite included in an amount of less than about 10 parts by weight relative to the total weight, and it is possible to prevent or suppress the charging/discharging capacity of the negative electrode from being reduced due to the natural graphite included in an amount of greater than 50 parts by weight.

The shape of the carbon-based negative electrode active material is not particularly limited, but may be a spherical graphite assembly shape formed by aggregation of flake-shaped graphites. Examples of the flake-shaped graphite may include not only natural graphite and artificial graphite, but also those obtained by graphitizing mesophase calcined carbon (bulk mesophase) using tar-pitch as raw materials, and cokes (e.g., raw coke, green coke, pitch coke, needle coke, and petroleum coke). For example, the carbon-based negative electrode active material may be assembled by using a plurality of highly crystalline natural graphites. Furthermore, one graphite assembly may be formed by aggregation of about 2 to 100 flake-shaped graphites, for example, about 3 to 20 graphites.

Also, the negative electrode active material may be included in an amount of about 85 parts by weight or more relative to the total weight of the negative electrode active layer, or may be included in an amount of, for example, about 90 parts by weight or more, 93 parts by weight or more, or 95 parts by weight or more.

The negative electrode active layer according to the present disclosure may optionally further include a conductive material, a binder, and other additives together with the carbon-based negative electrode active material that is a main component, as necessary.

The conductive material may include at least one type of carbon black such as, for example, acetylene black and Ketjen black; carbon nanotubes; and carbon fiber, but is not limited thereto.

As an example, the negative electrode active layer may contain, as the conductive material, carbon black, carbon nanotubes, or carbon fiber, either alone or in combination thereof.

The content of the conductive material may be about 0.1 parts by weight to 10 parts by weight relative to 100 parts by weight of the entire negative electrode active layer, or may be, for example, about 0.1 parts by weight to 8 parts by weight, 0.1 parts by weight to 5 parts by weight, 0.1 parts by weight to 3 parts by weight, 2 parts by weight to 6 parts by weight, or about 0.5 parts by weight to 2 parts by weight. In the present disclosure, by controlling the content of the conductive material within the above range, it is possible to prevent or suppress the resistance of the negative electrode from increasing and to prevent or suppress the charging capacity from lowering due to the low content of the conductive material. Then, it is possible to prevent or suppress a problem in that due to an excessive amount of conductive material, the content of the negative electrode active material is lowered, thereby lowering the charging capacity, or rapid charging characteristics are degraded due to an increase in the loading amount of the negative electrode active layer.

Furthermore, the binder is a component that assists in the binding of the negative electrode active material to the conductive material, etc. and the binding to the current collector, and may be appropriately applied within a range that does not lower the electrical properties of the electrode. Meanwhile, for example, the binder may include at least one selected from vinylidene fluoride-hexafluoropropylene copolymer (PVDF-co-HFP), polyvinylidene fluoride (PVdF), polyacrylonitrile, polymethylmethacrylate, polyvinyl alcohol, carboxymethylcellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR) and fluorine rubber.

The content of the binder may be about 0.1 parts by weight to 10 parts by weight relative to 100 parts by weight of the entire negative electrode active layer, or may be, for example, about 0.1 parts by weight to 8 parts by weight, 0.1 parts by weight to 5 parts by weight, 0.1 parts by weight to 3 parts by weight or 2 parts by weight to 6 parts by weight. In the present disclosure, by controlling the content of the binder contained in the negative electrode active layer within the above range, it is possible to prevent or suppress the adhesive force of the active layer being lowered due to the low content of the binder, or it is possible to prevent or suppress the electrical properties of the electrode from being lowered due to an excessive amount of binder.

The average thickness of the negative electrode active layer may be about 100 µm to 300 µm, or may be, for example, about 100 µm to 250 µm; 100 µm to 250 µm; or about 130 µm to 190 µm. In the present disclosure, by controlling the average thickness of the negative electrode active layer within the above range, crystal planes of the carbon-based negative electrode active material contained in each region may be uniformly aligned. This may improve the high-rate charging/discharging performance and energy density of the battery including the negative electrode.

Also, the negative electrode current collector is not particularly limited as long as it has high conductivity without causing a chemical change in the corresponding battery. For example, copper, stainless steel, nickel, titanium, or calcined carbon may be used, and in the case of copper or stainless steel, those surface-treated with carbon, nickel, titanium, or silver may also be used. **In** addition, the average thickness of the negative electrode current collector may be appropriately applied in the range of about 1 µm to 500 µm in consideration of the conductivity and total thickness of the negative electrode to be manufactured.

Meanwhile, the separator interposed between the positive electrode and the negative electrode of each unit cell is an insulating thin film having high ion permeability and mechanical strength, and is not particularly limited as long as it is commonly used in the art. However, for example, it is possible to use those including at least one type of polymer among chemically resistant and hydrophobic polypropylene; polyethylene; and polyethylenepropylene copolymer. The separator may have a form of a porous polymer substrate such as a sheet or a nonwoven fabric, which contains the above-described polymer, and in some cases, may have a form of a composite separator in which organic or inorganic particles are coated on the porous polymer substrate by an organic binder. **In** addition, the separator may have an average pore diameter of about 0.01 µm to 10 µm, and an average thickness of about 5 µm to 300 µm.

Moreover, the lithium secondary battery according to the present disclosure is not particularly limited, but may be applied in various forms such as a cylindrical type, a prismatic type, a pouch type or a coin type depending on the purpose of performance. The lithium secondary battery according to one embodiment of the present disclosure may be a pouch-type secondary battery.

### Manufacturing method of electrolyte composition for lithium secondary battery

Also, the present disclosure provides a method for manufacturing the aforementioned electrolyte composition.

Specifically, the method for manufacturing the electrolyte composition includes a step of providing a lithium salt, an electrolyte additive, and a non-aqueous organic solvent.

The electrolyte additive includes an inorganic compound, the non-aqueous organic solvent includes a cyclic ester-based solvent represented by Formula 1 below in an amount of about 60 vol.% or more and less than 100 vol.%, and the electrolyte composition exhibits a heat flow of about 30.0 W/g or less within a range of about 250 °C to 350 °C when the heat flow measurement is performed on a mixture containing a negative electrode active material of a 100% charged lithium secondary battery and the electrolyte composition, at a weight ratio of about 1:0.5: 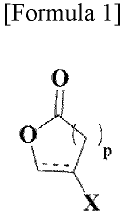 in Formula 1,
- - - - is a single bond or a double bond,
X is hydrogen, a fluoro group, or a vinyl group, and
p is an integer of 1 to 5.

The electrolyte composition manufactured by the aforementioned method for manufacturing an electrolyte composition may uniformly form a solid electrolyte interface layer (SEI layer) with high lithium ion conductivity and excellent heat resistance on the surface of the negative electrode during the activation of the lithium secondary battery. Therefore, since the reactivity between the negative electrode active material and the electrolyte composition is significantly reduced, the temperature at which the reaction between them starts (i.e., heat generation onset temperature) increases, and heat generation caused by, for example, negative electrode degradation may be suppressed. Furthermore, when the lithium secondary battery containing the electrolyte composition is exposed to high temperatures, the side reactions of the electrolyte composition occurring on the surface of the negative electrode may be minimized, resulting in excellent high-temperature safety.

In the method for manufacturing the electrolyte composition, since the components and contents constituting the electrolyte additive, the types of cyclic ester-based solvents represented by Formula 1 included in the non-aqueous organic solvent, and the like are the same as those previously described for the electrolyte composition, detailed descriptions thereof will be omitted.

Hereinafter, the present disclosure will be described in more detail with Examples and Experimental Examples.

However, the following examples and experimental examples merely illustrate the present disclosure, and the contents of the present disclosure are not limited to the following examples and experimental examples.

### Examples 1 to 11 and Comparative Examples 1 to 9. Manufacturing of electrolyte composition for lithium secondary battery

As for non-aqueous solvents, dihydrofuranone (DHF), fluorodihydrofuranone (FDHF), ethylene carbonate (EC), ethyl methyl carbonate (EMC) and fluoro ethylene carbonate (FEC) were prepared, and as for lithium salts, LiPF₆, LiBF₄, and LiFSI were prepared.

Also, as for electrolyte additives, inorganic compounds such as lithium nitrate (LiNO₃) and lithium sulfate (Li₂SO₄) were prepared, and as for additional electrolyte additives, LIBOB, LiODFB, LiDFOP, vinylene carbonate (VC), 1,3-propanesultone (PS), ethylene sulfate (ESa) and fluoroethylene carbonate (FEC) were prepared.

Each prepared lithium salt was added to the non-aqueous organic solvents at 30 °C to 40 °C such that the molality (M) noted in Table 1 was satisfied. Then, the electrolyte additives were added to prepare an electrolyte composition.

Here, the types of the non-aqueous organic solvents, the lithium salts and the electrolyte additives used in the electrolyte composition were as noted in Table 1 below. Also, the content of each component was adjusted as noted in Table 1 below. The content ratio of each component of the non-aqueous organic solvents was adjusted on the basis of the total volume of the non-aqueous organic solvents, and the electrolyte additive was adjusted on the basis of the total weight of the electrolyte composition.

**[Table 1]**

| | Non-aqueous organic solvent [unit: vol.%] | Lithium salt [unit: M] | Electrolyte additive [unit: wt.%] |
|---|---|---|---|
| Example 1 | DHF:EC=95:5 | LiPF₆:LiFSI=0.7:0.5 | VC:PS:ESa:FEC:LiNO₃=1:0.5:1:0.5:0.5 |
| Example 2 | DHF:EC=85:15 | LiPF₆:LiFSI=0.7:0.5 | VC:PS:ESa:FEC:LiNO₃=1:0.5:1:0.5:0.5 |
| Example 3 | DHF:EC=50:50 | LiPF₆:LiFSI=0.7:0.5 | VC:PS:ESa:FEC:LiNO₃=1:0.5:1:0.5:0.5 |
| Example 4 | FDHF:EC=85:15 | LiPF₆:LiFSI=0.7:0.5 | VC:PS:ESa:FEC:LiNO₃=1:0.5:1:0.5:0.5 |
| Example 5 | DHF:EC=85:15 | LiPF₆ | VC:PS:ESa:FEC:LiNO₃=1:0.5:1:0.5:0.5 |
| Example 6 | DHF:EC=85:15 | LiBF₄ | VC:PS:ESa:FEC:LiNO₃=1:0.5:1:0.5:0.5 |
| Example 7 | DHF:EC=85:15 | LiFSI | VC:PS:ESa:FEC:LiNO₃=1:0.5:1:0.5:0.5 |
| Example 8 | DHF:EC=85:15 | LiPF₆:LiFSI=0.7:0.5 | VC:PS:ESa:FEC:LiNO₃=1:0.5:1:0.5:0.1 |
| Example 9 | DHF:EC=85:15 | LiPF₆:LiFSI=0.7:0.5 | VC:PS:ESa:FEC:LiNO₃=1:0.5:1:0.5:1 |
| Example 10 | DHF:EC=85:15 | LiPF₆:LiFSI=0.7:0.5 | VC:PS:ESa:FEC:LiNO₃=1:0.5:1:0.5:2 |
| Example 11 | DHF:EC=85:15 | LiPF₆:LiFSI=0.7:0.5 | VC:PS:ESa:FEC:Li₂SO₄=1:0.5:1:0.5:0.5 |
| Comparative Example 1 | EC=100 | LiPF₆:LiFSI=0.7:0.5 | VC:PS:ESa:FEC:LiNO₃=1:0.5:1:0.5:0.5 |
| Comparative Example 2 | EC:EMC=70:30 | LiPF₆:LiFSI=0.7:0.5 | VC:PS:ESa:FEC:LiNO₃=1:0.5:1:0.5:0.5 |
| Comparative Example 3 | FEC:EC=85:15 | LiPF₆:LiFSI=0.7:0.5 | VC:PS:ESa:FEC:LiNO₃=1:0.5:1:0.5:0.5 |
| Comparative Example 4 | DHF=100 | LiPF₆:LiFSI=0.7:0.5 | VC:PS:ESa:FEC:LiNO₃=1:0.5:1:0.5:0.5 |
| Comparative Example 5 | DHF:EC=85:15 | LiPF₆:LiFSI=0.7:0.5 | VC:PS:ESa:FEC=1:0.5:1:0.5 |
| Comparative Example 6 | DHF:EC=85:15 | LiPF₆:LiFSI=0.7:0.5 | VC:PS:ESa:FEC:LiODFB=1:0.5:1:0.5:0.5 |
| Comparative Example 7 | DHF:EC=85:15 | LiPF₆:LiFSI=0.7:0.5 | VC:PS:ESa:FEC:LiBOB=1:0.5:1:0.5:0.5 |
| Comparative Example 8 | DHF:EC=85:15 | LiPF₆:LiFSI=0.7:0.5 | VC:PS:ESa:FEC:LiDFOP=1:0.5:1:0.5:0.5 |
| Comparative Example 9 | DHF:EC=85:15 | LiPF₆:LiFSI=0.7:0.5 | VC:PS:ESa:FEC:LiTDI=1:0.5:1:0.5:0.5 |
| EC: ethylene carbonate | | | |
| EMC: ethyl methyl carbonate | | | |
| FEC: fluoro ethylene carbonate | | | |
| DHF: dihydrofuranone | | | |
| FDHF: fluorodihydrofuranone | | | |
| LiPF₆: lithium hexafluorophosphate | | | |
| LiBF₄: lithium tetrafluoroborate | | | |
| LiFSI: lithium bis(trifluoromethanesulfonyl)imide (LiN(FSO₂)₂) | | | |
| LiBOB: lithium bis(oxalate)borate (LiB(C₂O₄)₂) | | | |
| LiODFB: lithium difluoro(oxalato)borate (LiBF₂(CO₂)₂) | | | |
| LiDFOP: lithium difluorobis-(oxalato)phosphate (LiPF₂(C₂O₄)₂) | | | |
| LiTDI: lithium 2-trifluoromethyl-4,5-dicyanoimidazole | | | |

### Examples 12 to 22 and Comparative Examples 10 to 18. Manufacturing of lithium secondary battery

LiNi_{0.86}Co_{0.05}Mn_{0.07}Al_{0.02}O₂ with a particle size of 5 µm was prepared as a positive electrode active material, and was mixed with a carbon-based conductive material and polyvinylidene fluoride as a binder at a weight ratio of 94:3:3 in N-methyl pyrrolidone (NMP) to prepare a positive electrode slurry with a solid content of 45%. The prepared positive electrode slurry was cast on an aluminum thin plate, dried in a vacuum oven of 120 °C, and then rolled to prepare a positive electrode having a positive electrode active layer with a thickness of 160 µm.

Besides, a carbon-based negative electrode active material was prepared by mixing natural graphite and artificial graphite at a weight ratio of 3:7. 97 parts by weight of the prepared negative electrode active material and 3 parts by weight of styrene butadiene rubber (SBR) were mixed with water to prepare a negative electrode slurry with a solid content of 40%. The negative electrode slurry was cast on a copper thin plate, dried in a vacuum oven of 130 °C, and then rolled to prepare a negative electrode having a negative electrode active layer with a thickness of 180 µm.

A separator made of 18 µm polypropylene was interposed between the obtained positive electrode and negative electrode, and then was inserted into a casing. Then, the electrolyte composition, which was previously prepared in each of Examples 1 to 11 and Comparative Examples 1 to 9, was injected as noted in Table 2 below to assemble a lithium secondary battery.

Initial charging was performed on each assembled lithium secondary battery. Specifically, the lithium secondary battery was initially charged to an end-of-charge voltage of 4.2 V at 55±2 °C under the conditions noted in Table 2 below. Then, an activated lithium secondary battery was manufactured.

**[Table 2]**

| Type of manufactured lithium secondary battery | Type of electrolyte composition |
|---|---|
| Example 12 | Electrolyte composition of example 1 |
| Example 13 | Electrolyte composition of example 2 |
| Example 14 | Electrolyte composition of example 3 |
| Example 15 | Electrolyte composition of example 4 |
| Example 16 | Electrolyte composition of example 5 |
| Example 17 | Electrolyte composition of example 6 |
| Example 18 | Electrolyte composition of example 7 |
| Example 19 | Electrolyte composition of example 8 |
| Example 20 | Electrolyte composition of example 9 |
| Example 21 | Electrolyte composition of example 10 |
| Exmample 22 | Electrolyte composition of example 11 |
| Comparative Example 10 | Electrolyte composition of comparative example 1 |
| Comparative Example 11 | Electrolyte composition of comparative example 2 |
| Comparative Example 12 | Electrolyte composition of comparative example 3 |
| Comparative Example 13 | Electrolyte composition of comparative example 4 |
| Comparative Example 14 | Electrolyte composition of comparative example 5 |
| Comparative Example 15 | Electrolyte composition of comparative example 6 |
| Comparative Example 16 | Electrolyte composition of comparative example 7 |
| Comparative Example 17 | Electrolyte composition of comparative example 8 |
| Comparative Example 18 | Electrolyte composition of comparative example 9 |

### Experimental Example

The following experiments were performed to evaluate the high-temperature safety of the electrolyte composition for the lithium secondary battery according to the present disclosure and the lithium secondary battery including the same.

### 1) Evaluation of solubility of electrolyte additive

Targeting the electrolyte composition prepared in each of Examples 1 to 11 and Comparative Examples 1 to 9, evaluation was performed on the degree of dissolution of the inorganic additive included in these compositions. Specifically, each electrolyte composition was subjected to reduced-pressure filtration by using filter paper. Next, it was determined whether the inorganic additive remaining on the filter paper was present.

As a result, it was found that the inorganic additive did not remain on the filter paper in the electrolyte composition containing dihydrofuranone (DHF) as a non-aqueous organic solvent. However, in the case of the electrolyte composition not containing dihydrofuranone (DHF), it was found that most of the inorganic additive remained without being dissolved in the non-aqueous organic solvent.

This means that inorganic additives such as lithium nitrate and lithium sulfate have high solubility in the cyclic ester-based solvent represented by Formula 1 but have low solubility in the carbonate-based organic solvent generally used in the electrolyte composition.

### 2) Measurement of heat generation onset temperature and heat flow between negative electrode active material and electrolyte composition

The lithium secondary batteries manufactured in Examples 12 to 22 and Comparative Examples 10 to 18 were fully charged to 4.25 V at a rate of 0.5 C at 25 °C under CC-CV conditions, and the fully charged lithium secondary batteries were disassembled. In the disassembled lithium secondary battery, the mixed graphite which is a negative electrode active material, and the electrolyte composition were weighed and mixed at a weight ratio of 1:0.5.

The prepared mixture was injected into a sample can of a differential scanning calorimeter (DSC) to prepare a sample. Then, the heat generation onset temperature and the heat flow were measured for the prepared sample. Here, while the temperature was increased at a heating rate of 10±0.1 °C/min, the temperature change and the heat flow of the sample were measured in the range of 100 to 400 °C.

From the measured results, the heat flow between the negative electrode active material and electrolyte composition included in each lithium secondary battery was evaluated. Among the measured results, if there were two or more valid heat flow peaks within a temperature range of 100 °C to 400 °C, the value of the peak showing the largest heat flow value was judged as the corresponding heat flow. The results are illustrated in Table 3 and FIG. 1 below.

### 3) Thermal runaway test evaluation

Each of the lithium secondary batteries manufactured in Examples 12 to 22 and Comparative Examples 10 to 18 was charged under constant current (CC) conditions maintained at 1.25 A until 4.2 V was reached at 25 °C, and then was maintained at 4.2 V. After charging was completed, the battery was discharged and activated under constant current (CC) conditions maintained at 1.25 A until 2.85 V was reached. After that, each activated lithium secondary battery was left idle at 25 °C for 6 h.

Next, the battery was fully charged under constant current (CC) conditions maintained at 1.25 A until 4.2 V was reached at 25 °C, and a thermal runaway test was performed by using an accelerating rate calorimeter (ARC). Here, as for the ARC, a product of THT (Thermal Hazard Technology) was used, and the thermal runaway test was performed by a heat-wait-search (HWS) method. In the HWS method, an insulated oven chamber equipped with each lithium secondary battery was heated by 5 °C at a rate of 10 °C/min and waited for 10 min until the temperature thereof was raised from 50 °C to 190 °C. Here, when each heated lithium secondary battery exhibits a temperature change of 0.02 °C/min or more during a 10-min standby of the lithium secondary battery, it is recognized that self-heating corresponding to thermal runaway (TR) is proceeding. After that, no additional thermal energy was applied so that the temperature was changed by self-heating of each secondary battery. After the self-heating of the secondary battery, the self-heating profile of the secondary battery was measured, and the maximum temperature of the secondary battery was calculated from the measured self-heating profile. The results are noted in Table 3 below.

**[Table 3]**

| Type of electrolyte composition | DSC analysis of lithium secondary battery | | Maximum temperature during thermal runaway test |
|---|---|---|---|
| | Heat generation onset temperature | Heat flow | |
| Example 1 | 280~300°C | about 24±0.5 W/g | 249.6°C |
| Example 2 | 280~300°C | about 22±0.5 W/g | 245.0°C |
| Example 3 | 265~275°C | about 26±0.5 W/g | 262.3°C |
| Example 4 | 280~300°C | about 24±0.5 W/g | 250.7°C |
| Example 5 | 265~275°C | about 28±0.5 W/g | 277.4°C |
| Example 6 | 265~275°C | about 30±0.5 W/g | 282.5°C |
| Example 7 | 265~275°C | about 27±0.5 W/g | 274.9°C |
| Example 8 | 280~290°C | about 26±0.5 W/g | 266.8°C |
| Example 9 | 280~300°C | about 24±0.5 W/g | 251.9°C |
| Example 10 | 280~300°C | about 25±0.5 W/g | 256.3°C |
| Example 11 | 280~300°C | about 23±0.5 W/g | 252.4°C |
| Comparative Example 1 | 170~180°C | about 60±0.5 W/g | 519.8°C |
| Comparative Example 2 | 170~180°C | about 60±0.5 W/g | 520.1°C |
| Comparative Example 3 | 170~180°C | about 60±0.5 W/g | 519.5°C |
| Comparative Example 4 | 225~230°C | about 34±0.5 W/g | 310.7°C |
| Comparative Example 5 | 225~230°C | about 59±0.5 W/g | 521.0°C |
| Comparative Example 6 | 265~275°C | about 38±0.5 W/g | 442.5°C |
| Comparative Example 7 | 250~265°C | about 30±0.5 W/g | 451.3°C |
| Comparative Example 8 | 250~265°C | about 37±0.5 W/g | 439.7°C |
| Comparative Example 9 | 240~250°C | about 37±0.5 W/g | 476.2°C |

It can be seen that the electrolyte composition for the lithium secondary battery according to the present disclosure and the lithium secondary battery including the same are excellent in high-temperature safety.

Referring to Table 3, it was found that in the case of Examples, the heat generation onset temperature, at which heat generation starts due to a reaction between the negative electrode active material and the electrolyte composition during high temperature exposure, had a value between approximately 265 °C to 300 °C. Meanwhile, in the case of Comparative Examples, the heat generation onset temperature had a value between approximately 170 °C to 275 °C, which was significantly lower than the above value. Also, it was found that in the case of Examples, the heat flow had a value between approximately 22 W/g to 30 W/g while in the case of Comparative Examples, the heat flow had a value between approximately 30 W/g to 60 W/g, which was larger than the above value. Also, in the thermal runaway test, it was found that in the case of Examples, the maximum temperature had a value between 245 °C and 282.5 °C while in the case of Comparative Examples, the maximum temperature had a value between 310.7 °C to 521 °C, which was much higher than the above value.

Referring to FIG. 1, it was found that the electrolyte composition of Example 2 indicated by the dotted line had a low heat flow near about 20 W/g, and the electrolyte composition of Comparative Example 5 indicated by the solid line had a heat flow value near 60 W/g.

This means that the electrolyte composition prepared in Examples effectively suppresses the reaction between the negative electrode active material and the electrolyte composition during high temperature exposure, thereby improving heat generation caused by the reaction between the negative electrode active material and the electrolyte composition.

From these results, it can be found that the electrolyte composition for the lithium secondary battery according to the present disclosure is excellent in electrical performance. Furthermore, the heat flow between the negative electrode active material and the electrolyte composition is controlled to fall within a predetermined low range, which causes an excellent effect of improving safety issues caused by the negative electrode active material at high temperatures.

While the above has been described with reference to the embodiments of the present disclosure, it will be understood by those skilled in the art or having ordinary knowledge of the art that various modifications and changes may be made to the present disclosure without departing from the technical scope of various embodiments of the present disclosure described in the claims to be described later, which will be described below.

Accordingly, the technical scope of the present disclosure is not limited to what is described in the detailed description of the disclosure but should be defined by the patent claims.

## Claims

1. An electrolyte composition for a lithium secondary battery, the electrolyte composition comprising:
a lithium salt, an electrolyte additive, and a non-aqueous organic solvent,
wherein the electrolyte additive includes an inorganic compound,
the non-aqueous organic solvent includes a cyclic ester-based solvent represented by Formula 1 below in an amount of 60 vol.% or more and less than 100 vol.%, and
the electrolyte composition exhibits a heat flow of 30.0 W/g or less within a range of 250 °C to 350 °C when the heat flow measurement is performed on a mixture containing a negative electrode active material of a 100% charged lithium secondary battery and the electrolyte composition, at a weight ratio of 1:0.5: 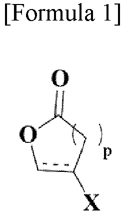
in Formula 1,
- - - - is a single bond or a double bond,
X is hydrogen, a fluoro group, or a vinyl group, and
p is an integer of 1 to 5.

2. The electrolyte composition for a lithium secondary battery according to claim 1, wherein the heat flow is 5 W/g to 25 W/g.

3. The electrolyte composition for a lithium secondary battery according to claim 1, wherein the inorganic compound includes at least one type of lithium nitrate (LiNO₃), lithium chloride (LiCl), lithium fluoride (LiF), lithium bromide (LiBr), lithium borate (Li₃BO₃), lithium carbonate (Li₂CO₃), lithium sulfate (Li₂SO₄), and lithium phosphate (Li₃PO₄).

4. The electrolyte composition for a lithium secondary battery according to claim 1, wherein the electrolyte additive is included in an amount greater than 0 wt.% and equal to or less than 5 wt.% with respect to the total weight of the electrolyte composition.

5. The electrolyte composition for a lithium secondary battery according to claim 1, further comprising at least one type of cyclic carbon-based compound among vinylene carbonate (VC), 1,3-propanesultone (PS), ethylene sulfate (ESa), propylene sulfate (PSa), butylene sulfate (BSa), and fluoroethylene carbonate (FEC).

6. The electrolyte composition for a lithium secondary battery according to claim 5, wherein the cyclic carbon-based compound is included in an amount of 100 parts by weight to 1000 parts by weight with respect to 100 parts by weight of the inorganic compound.

7. The electrolyte composition for a lithium secondary battery according to claim 1, wherein the cyclic ester-based solvent represented by Formula 1 includes at least one type of dihydrofuranone, vinyldihydrofuranone, fluorodihydrofuranone, furanone, tetrahydropyranone, methyldihydrofuranone, propyltetrahydropyranone, and oxepanone.

8. The electrolyte composition for a lithium secondary battery according to claim 1, wherein the non-aqueous organic solvent further includes at least one type of carbonate-based solvent among ethyl methyl carbonate (EMC), dimethyl carbonate (DMC), diethyl carbonate (DEC), ethylene carbonate (EC), propylene carbonate (PC), and butylene carbonate (BC).

9. The electrolyte composition for a lithium secondary battery according to claim 8, wherein the carbonate-based solvent is included in an amount greater than 0 vol.% and equal to or less than 40 vol.% with respect to the total weight of the non-aqueous organic solvent.

10. The electrolyte composition for a lithium secondary battery according to claim 1, wherein the lithium salt includes:
Li+ as a cation, and
at least one type of PF₆⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂O₄)₂PF₂⁻, BF₂C₂O₄⁻, B(C₂O₄)₂⁻, (CF₃SO₂)₂N⁻, (FSO₂)₂N⁻, (CF₃CF₂SO₂)₂N⁻, and ((C(CN))₂NC(CF₃))N⁻, as an anion.

11. The electrolyte composition for a lithium secondary battery according to claim 1, wherein the negative electrode active material applied for heat flow measurement includes at least one type of natural graphite, artificial graphite, expanded graphite, non-graphitizable carbon, acetylene black, and Ketjen black.

12. A lithium secondary battery comprising:
an electrode assembly including a positive electrode, a negative electrode and a separator provided between the positive electrode and the negative electrode; and
the above-described electrolyte composition according to claim 1, with which the electrode assembly is impregnated.

13. The lithium secondary battery according to claim 12, wherein the positive electrode includes a positive electrode active layer provided on at least one surface of a positive electrode current collector and containing a positive electrode active material represented by Formula 2:
[Formula 2] Liₓ[Ni_{y}Co_{z}Mn_{w}M¹ᵥ]O₂
in Formula 2,
M¹ is at least one type of element selected from the group including W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, and v satisfy ranges of 0.9≤x≤1.30, 0.6≤y<1, 0<z≤0.2, 0<w≤0.2, and 0≤v≤0.1, respectively, and y+z+w+v=1.

14. A manufacturing method of an electrolyte composition for a lithium secondary battery, the method comprising:
providing a lithium salt, an electrolyte additive, and a non-aqueous organic solvent,
wherein the electrolyte additive includes an inorganic compound,
the non-aqueous organic solvent includes a cyclic ester-based solvent represented by Formula 1 below in an amount of 60 vol.% or more and less than 100 vol.%, and
the electrolyte composition exhibits a heat flow of 30.0 W/g or less within a range of 250 °C to 350 °C when the heat flow measurement is performed on a mixture containing a negative electrode active material of a 100% charged lithium secondary battery and the electrolyte composition, at a weight ratio of 1:0.5: 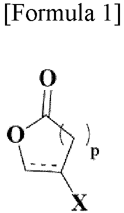
in Formula 1,
- - - - is a single bond or a double bond,
X is hydrogen, a fluoro group, or a vinyl group, and
p is an integer of 1 to 5.

15. The manufacturing method of an electrolyte composition for a lithium secondary battery according to claim 14, wherein the heat flow is 5 W/g to 25 W/g.

16. The manufacturing method of an electrolyte composition for a lithium secondary battery according to claim 14, wherein the inorganic compound includes at least one type of lithium nitrate (LiNO₃), lithium chloride (LiCl), lithium fluoride (LiF), lithium bromide (LiBr), lithium borate (Li₃BO₃), lithium carbonate (Li₂O₃), lithium sulfate (Li₂O₄), and lithium phosphate (Li₃PO₄.

17. The manufacturing method of an electrolyte composition for a lithium secondary battery according to claim 14, wherein the electrolyte additive is included in an amount greater than 0 wt.% and equal to or less than 5 wt.% with respect to the total weight of the electrolyte composition.

18. The manufacturing method of an electrolyte composition for a lithium secondary battery according to claim 14, wherein the electrolyte additive further includes at least one type of cyclic carbon-based compound among vinylene carbonate (VC), 1,3-propanesultone (PS), ethylene sulfate (ESa), propylene sulfate (PSa), butylene sulfate (BSa), and fluoroethylene carbonate (FEC).

19. The manufacturing method of an electrolyte composition for a lithium secondary battery according to claim 18, wherein the cyclic carbon-based compound is included in an amount of 100 parts by weight to 1000 parts by weight with respect to 100 parts by weight of the inorganic compound.

20. The manufacturing method of an electrolyte composition for a lithium secondary battery according to claim 14, wherein the cyclic ester-based solvent represented by Formula 1 includes at least one type of dihydrofuranone, vinyldihydrofuranone, fluorodihydrofuranone, furanone, tetrahydropyranone, methyldihydrofuranone, propyltetrahydropyranone, and oxepanone.
